# FASCICULE DE BREVET EUROPEEN

(11) **EP 3 728 927 B1**
(45) Date de publication et mention de la délivrance du brevet: **05.01.2022**
(21) Numéro de dépôt: 18826617.5
(22) Date de dépôt: 18.12.2018
(51) Int. Cl.: F16L 37/098

(54) **ENSEMBLE DE RACCORDEMENT DE CONDUITS DE TRANSPORT DE FLUIDE**
VORRICHTUNG ZUM VERBINDEN VON FLÜSSIGKEITSFÖRDERROHREN
ASSEMBLY FOR COUPLING FLUID CONVEYING PIPES

(30) Priorité: 19.12.2017 FR 1762551
(43) Date de publication de la demande: 28.10.2020
(73) Titulaire: Parker Hannifin EMEA S.à.r.l., 1163 Etoy (CH)
(72) Inventeur: LE QUERE, Philippe, 35830 BETTON (FR)
(74) Mandataire: Lavialle, Bruno François Stéphane
(86) Numéro de dépôt international: PCT/EP2018/085657
(87) Numéro de publication internationale: WO 2019/121787

(56) Documents cités:
- US-A- 4 691 943
- US-A- 4 936 345
- US-A1- 2016 245 441

## Description

La présente invention concerne le domaine du transport de fluides liquides ou gazeux et plus particulièrement les dispositifs de raccordement de conduits de transport de fluide entre eux ou avec des éléments de circuit émetteurs ou récepteurs de fluide.

### ETAT DE LA TECHNIQUE

Il est connu des dispositifs de raccordement comportant un corps tubulaire ayant au moins un tronçon d'extrémité dans lequel est engagé un insert tubulaire de connexion étanche agencé pour recevoir et y assujettir de manière étanche une extrémité de conduite. Le corps comprend au moins une patte de retenue appliquée élastiquement derrière un décrochement externe de l'insert tubulaire pour s'opposer à une extraction de l'insert tubulaire. Au moins un élément annulaire d'étanchéité s'étend entre l'insert tubulaire et le tronçon d'extrémité du corps. Le document US 4 936 345 divulgue un dispositif de raccordement de ce genre.

Ces dispositifs de raccordement ne sont généralement pas démontables de sorte qu'une défaillance de l'insert tubulaire oblige au remplacement du dispositif de raccordement en totalité.

### OBJET DE L'INVENTION

Un but de l'invention est de fournir un moyen pour limiter les coûts de maintenance des dispositifs de raccordement de ce type.

### BREF EXPOSE DE L'INVENTION

A cet effet, on prévoit, selon l'invention, un ensemble de raccordement de conduits de transport de fluide, comprenant un dispositif de raccordement et un outil de démontage du dispositif, le dispositif de raccordement comportant un corps tubulaire ayant au moins un tronçon d'extrémité dans lequel est engagé un insert tubulaire de connexion étanche agencé pour être assujetti de manière étanche à un conduit, le corps comportant au moins une patte de retenue appliquée élastiquement derrière un décrochement externe de l'insert tubulaire pour s'opposer à une extraction de l'insert tubulaire, au moins un élément annulaire d'étanchéité s'étendant entre l'insert tubulaire et le tronçon d'extrémité du corps.

L'outil comprend une lame flexible et le corps comprend un passage transversal à l'axe du corps, débouchant d'une part à l'extérieur du corps et d'autre part sur un côté de la patte de retenue pour permettre l'insertion de la lame entre l'insert tubulaire et la patte de retenue pour soulever la patte de retenue sur sa largeur afin de soustraire le décrochement à la patte de retenue et permettre l'extraction de l'insert tubulaire.

Ainsi, la lame permet d'appliquer un soulèvement de la patte de retenue sur toute la largeur de celle-ci pour éviter le risque que la patte de retenue se torde autour de son axe longitudinal et butte sur le décrochement du côté opposé à celui d'introduction de la lame.

De préférence, la lame et le passage sont agencés pour que l'introduction de la lame provoque une torsion de celle-ci autour de son axe longitudinal pour former une rampe de soulèvement de la patte de retenue par le décrochement lors de l'extraction de l'insert tubulaire.

Cette solution est particulièrement avantageuse car elle permet l'utilisation d'une lame relativement flexible qui va pouvoir se déformer pour passer plus facilement entre l'insert tubulaire et la patte de retenue en épousant plus ou moins la forme arrondie de l'insert tubulaire dans la zone de contact avec la patte de retenue.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue en coupe longitudinale d'un dispositif de raccordement selon l'invention, partiellement assemblé ;
- la figure 2 est une vue en coupe longitudinale d'un dispositif de raccordement selon l'invention, une fois assemblé ;
- les figures 3 et 4 sont des vues en perspectives de dispositif de raccordement avant et après insertion d'un outil selon un premier mode de réalisation ;
- les figures 5 et 6 sont des vues partielles en élévation montrant l'entrée du passage avant et après insertion partielle de la lame de l'outil ;
- la revendication 7 est une vue partielle en coupe transversale du dispositif de raccordement montrant la lame après insertion partielle ;
- la figure 8 est une vue analogue à celles des figures 5 et 6, alors que l'insertion est quasi terminée ;
- la figure 9 est une vue analogue à la figure 7, montrant la lame après un quasi achèvement de l'insertion ;
- la figure 10 est une en perspective du dispositif de raccordement selon l'invention et illustrant deux utilisations d'un outil selon un deuxième mode de réalisation ;
- la figure 11 est une vue en perspective de cet outil.

### DESCRIPTION DETAILLEE DE L'INVENTION

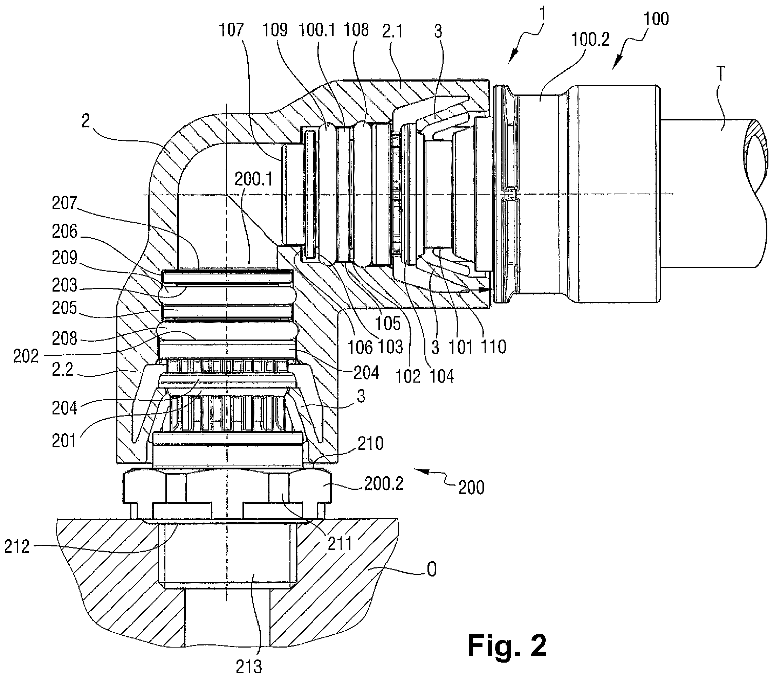

L'invention est ici décrite en application au raccordement d'un tube T formant un premier conduit de transport de fluide à un conduit d'un organe O émetteur ou récepteur de fluide (voir la figure 2).

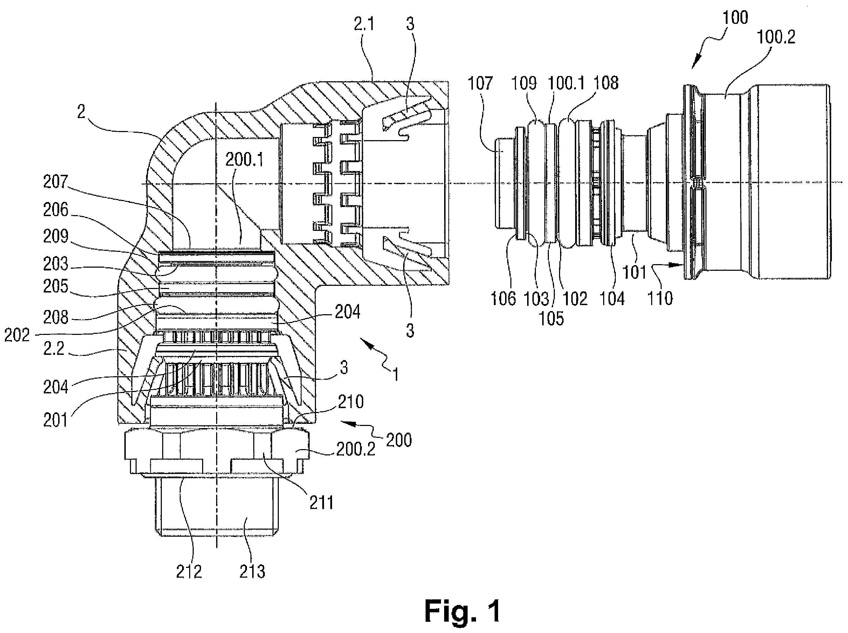

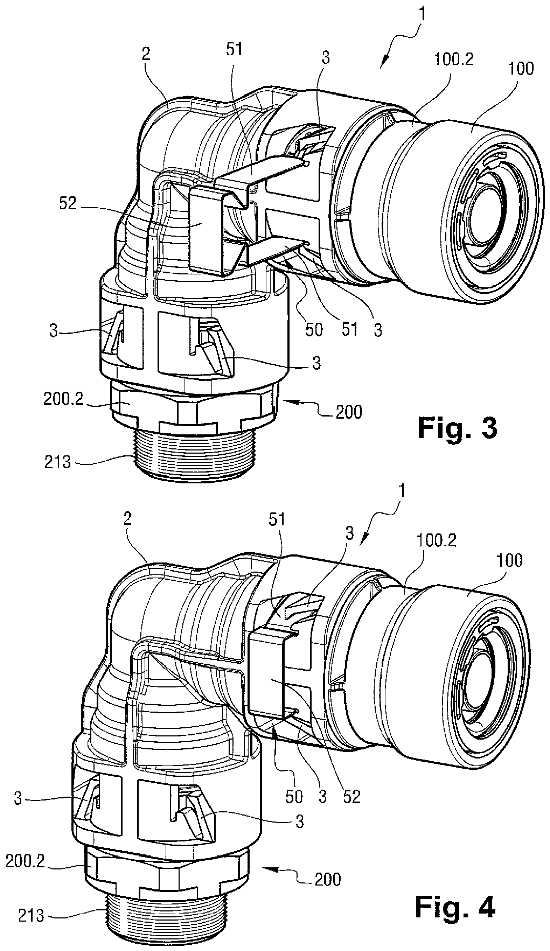

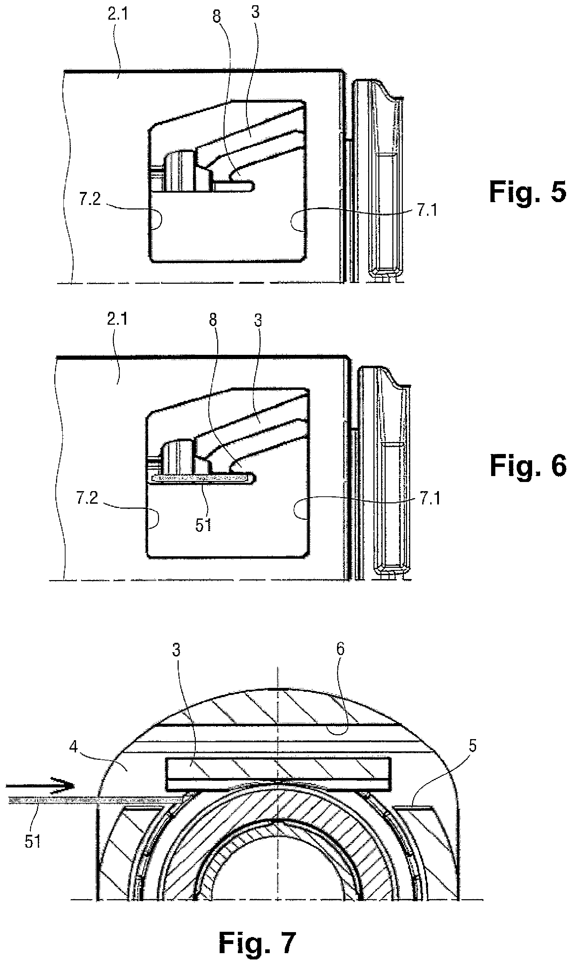

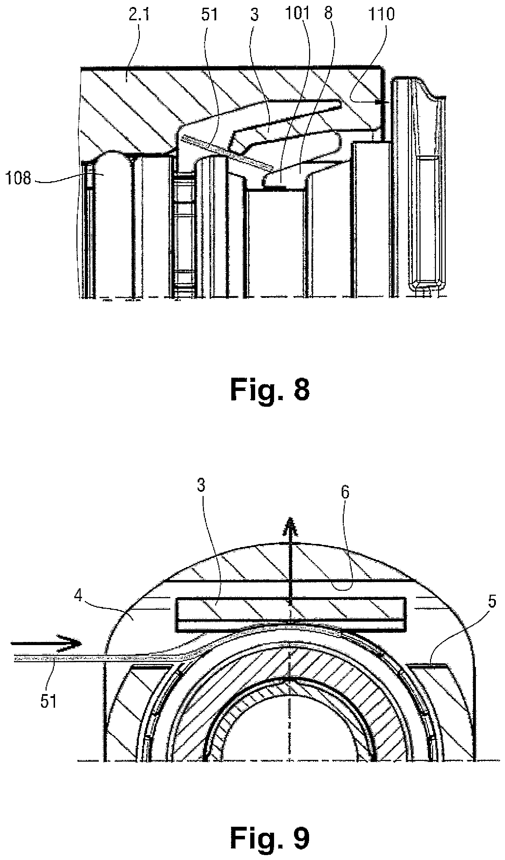

En référence aux figures 1 à 9, l'ensemble de raccordement comprend un dispositif de raccordement, généralement désigné en 1, et un outil de démontage du dispositif généralement désigné en 50.

Le dispositif de raccordement comportant un corps tubulaire 2 ayant un premier tronçon d'extrémité 2.1 dans lequel est engagé un insert 100 agencé pour être assujetti de manière étanche à une extrémité du tube T et un deuxième tronçon d'extrémité 2.2 dans lequel est engagé un insert 200 agencé pour être assujetti de manière étanche à l'organe O.

L'insert 100 a une forme tubulaire divisée en un premier tronçon 100.1 de liaison au premier tronçon d'extrémité 2.1 du corps 2 et un deuxième tronçon 100.2 de liaison au tube T.

Le tronçon 100.1 est pourvu de gorges annulaires 101, 102, 103. La gorge 101 est délimitée entre le tronçon 100.2 et une collerette 104, la gorge 102 est délimitée entre la collerette 104 et une collerette 105, la gorge 103 est délimitée entre la collerette 105 et une collerette 106 en saillie de laquelle s'étend axialement une portion terminale libre 107 du tronçon 100.1. La gorge 102 reçoit un joint d'étanchéité annulaire 108 et la gorge 103 reçoit un joint d'étanchéité annulaire 109. Les joints d'étanchéité 108, 109 sont destinés à assurer une étanchéité entre le tronçon 100.1 et le corps 2.

Le tronçon 100.2 s'étend en saillie du tronçon d'extrémité 2.1 contre une face terminale duquel il est en butée par un épaulement 110 et est pourvu intérieurement, de manière connue en soi, d'un organe de connexion instantanée comportant un élément de retenue élastique de l'extrémité de tube T introduite dans l'insert et d'au moins un joint d'étanchéité annulaire pour assurer une étanchéité entre l'extrémité de tube T et l'insert.

L'insert 200 a une forme tubulaire divisée en un premier tronçon 200.1 de liaison au deuxième tronçon d'extrémité 2.2 du corps 2 et un deuxième tronçon 200.2 de liaison à l'organe O.

Le tronçon 200.1 est identique au tronçon 100.1 et comprend ainsi : des gorges annulaires 201, 202, 203 ; des collerettes 204, 205, 206 ; et une portion terminale libre 207. Les gorges 202, 203 reçoivent des joints d'étanchéité annulaires 208, 209.

Le tronçon 200.2 s'étend en saillie du tronçon d'extrémité 2.2 contre une face terminale duquel il est en butée par un épaulement 210 et une partie 211 de section extérieure hexagonale ayant un côté formant l'épaulement 210 et, à l'opposé, un côté pourvue d'une rainure annulaire pourvu d'un joint d'étanchéité 212 et du centre de laquelle s'étend en saillie un tronçon final fileté 213 destiné à être engagé dans l'extrémité taraudée du conduit de l'organe O.

Chacun des tronçons 2.1, 2.2 est pourvu de deux pattes de retenue 3 diamétralement opposées l'une à l'autre. Chaque patte de retenue 3 a une première extrémité solidaire du corps 2 du côté du débouché de la face terminale du tronçon 2.1, 2.2 concerné et, à l'opposé, une deuxième extrémité qui est libre et est plus proche de l'axe central du tronçon 2.1, 2.2 concerné que la première extrémité. Les pattes de retenue 3 sont élastiquement déformables entre un état de repos dans lequel elles délimitent une section de passage inférieure au diamètre de la collerette 104, 204 et un état déformé dans lequel elles délimitent une section de passage supérieure au diamètre de la collerette 104, 204.

Ainsi, lorsque le tronçon 100.1, 200.1 de l'insert 100, 200 est engagé dans le tronçon d'extrémité 2.1, 2.2, l'extrémité libre des pattes de retenue 3 va venir frotter sur la collerette 106, 206, sur le joint d'étanchéité 109, 209, sur la collerette 105, 205, sur le joint d'étanchéité 108, 208, puis sur la collerette 104, 204 avant de tomber dans la gorge 101, 201. On comprend qu'en cas de tentative d'extraction de l'insert 100, 200 hors du corps 2 l'extrémité libre des pattes de retenue 3 vient buter contre la collerette 104, 204 qui forme un décrochement.

Le retrait des inserts 100, 200, sans dégradation ni de l'insert ni du corps 2, n'est possible qu'en utilisant l'outil 50 comprend à cette fin deux lames flexibles 51 agencées pour permettre un soulèvement des pattes de retenus 3. Les lames flexibles 51 sont identiques et parallèles l'une à l'autre, ayant des faces principales en regard l'une de l'autre. Les lames flexibles 51 ont des extrémités solidaires l'une de l'autre, ici par une portion pliée, et une extrémité libre. L'outil 50 est ici en une seule bande métallique pliée.

Pour permettre un accès aux pattes de retenue 3 depuis l'extérieur du corps 2, chaque patte de retenue 3 s'étend dans un passage 4 s'étendant transversalement dans le tronçon 2.1, 2.2. Le passage 4 comprend une paroi latérale 7.1 du côté de la face terminale du tronçon 2.1, 2.2, une paroi terminale 7.2 séparée d'une distance au moins égale à la largeur des lames flexibles, une paroi inférieure 5 présentant une ouverture par laquelle s'étend en saillie une portion extérieure la collerette 104, 204, et une paroi supérieure 6 autorisant la déformation de la patte de retenue 3 vers son état déformé. Les parois 5 et 6 sont parallèles l'une à l'autre et le passage 4 débouche à l'extérieur à ses deux extrémités.

Chaque passage 4 débouche ainsi d'une part à l'extérieur du corps et d'autre part sur chaque côté de la patte de retenue 3 pour permettre l'insertion de la lame 51 entre la collerette 104, 204 de l'insert 100, 200 et la patte de retenue 3 pour soulever la patte de retenue sur sa largeur afin de soustraire le décrochement à la patte de retenue 3 et permettre l'extraction de l'insert 100, 200.

Les lames 51 et les passages 4 sont agencés pour que l'introduction des lames provoque une torsion de celles-ci autour de leur axe longitudinal pour former une rampe de soulèvement des pattes de retenue par les collerettes 104, 204 lors de l'extraction de l'insert 100, 200.

Au voisinage de chaque extrémité de chaque passage 4 est prévu au moins un relief de guidage 8 qui est agencé à distance de la paroi 7.2 pour plaquer un côté de la lame 51 à plat contre ladite paroi 7.2 et du côté de la paroi latérale 7.1 pour placer la lame 51 contre la paroi 7.2. Dans cette position, l'axe longitudinal de la lame 51 est aligné avec la face terminale de l'extrémité libre de la patte de retenue 3. Ainsi, la patte flexible 51 se déforme en flexion pour monter par-dessus la collerette 104, 204 mais aussi en torsion car seul le côté de la lame flexible 51 adjacent à la paroi 7.2 est monté sur la collerette 104, 204, l'autre côté étant coincé sous l'extrémité libre de la patte de retenue 3. La lame flexible 51 forme ainsi une rampe permettant à la collerette 104, 204 de passer sous l'extrémité libre de la patte de retenue 3 du fait que la collerette 104, 204 va soulever ladite extrémité libre lors de l'extraction de l'insert 100, 200.

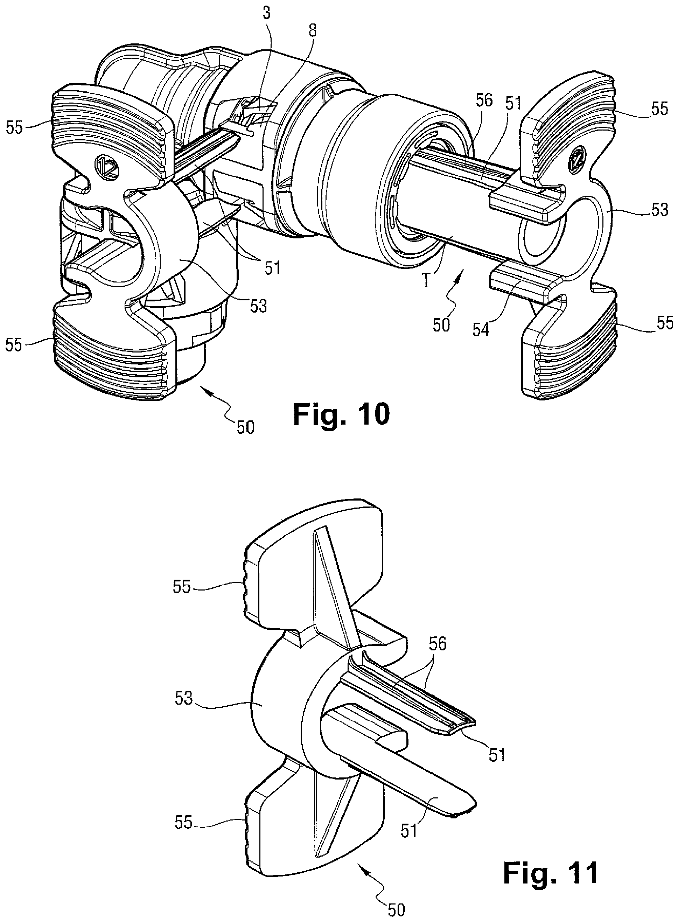

Aux figures 10 et 11, l'outil 50 est conformé pour que les lames puissent être également introduites axialement entre le tube T et l'élément de retenue élastique des moyens de connexion instantanée pour permettre l'extraction du tube T.

L'outil 50 comprend deux lames 51 parallèles et diamétralement opposées l'une à l'autre en ayant des faces principales en regard l'une de l'autre. Les lames 51 ont une extrémité solidaire d'une bague 53 pourvue d'une ouverture 54 permettant une insertion latérale de l'outil sur le tube T. Les bords de l'ouverture 54 sont évasés pour faciliter l'insertion latérale.

Deux oreilles 55 sont solidaires de la bague 53 au niveau de chaque lame flexible 51 pour permettre à l'utilisateur d'appliquer un effort important sur l'outil 50.

L'outil 50 est ici réalisé par injection de matière plastique dans un moule. Les lames flexibles sont avantageusement pourvues d'au moins une nervure longitudinale 56, ici au nombre de deux. Lors du démontage du dispositif par introduction de la lame dans le passage 4, la ou les nervures 56 vont coopérer avec l'extrémité libre de la patte de retenue 3 afin de guider la lame dans le passage de manière à empêcher que la lame flexible ne s'échappe dans la gorge 101.

Bien entendu, l'invention n'est pas limitée aux modes de réalisation décrits mais englobe toute variante de l'invention telle que définie par les revendications.

En particulier, le corps peut ne comprendre qu'une seule patte de retenue (l'outil ne comporte alors qu'une lame) ou être agencé pour n'accueillir qu'un insert.

Le passage peut ne déboucher à l'extérieur que d'un côté.

L'outil peut être en une ou plusieurs pièces. Par exemple il est possible d'ajouter une pièce d'appui sur la portion pliée de l'outil selon le premier mode de réalisation.

Les inserts peuvent être identiques ou non.

## Revendications

1. Ensemble de raccordement de conduits de transport de fluide, comprenant un dispositif de raccordement (1) et un outil de démontage (50) du dispositif, le dispositif de raccordement comportant un corps tubulaire (2) ayant au moins un tronçon d'extrémité (2.1), et un insert (100) tubulaire de connexion étanche agencé pour être assujetti de manière étanche à un conduit (T), l'insert (100) tubulaire étant engagé dans le tronçon d'extrémité (2.1) du corps tubulaire (2), le corps comportant au moins une patte de retenue (3) appliquée élastiquement derrière un décrochement externe (104) de l'insert tubulaire pour s'opposer à une extraction de l'insert tubulaire, au moins un élément annulaire d'étanchéité (108, 109) s'étendant entre l'insert tubulaire et le tronçon d'extrémité du corps, **caractérisé en ce que** l'outil comprend une lame flexible (51) et le corps comprend un passage (4) transversal à l'axe du corps tubulaire (2), ledit passage (4) transversal débouchant d'une part à l'extérieur du corps et d'autre part sur un côté de la patte de retenue pour permettre l'insertion de la lame entre l'insert tubulaire et la patte de retenue pour soulever la patte de retenue sur sa largeur afin de soustraire le décrochement à la patte de retenue et permettre l'extraction de l'insert tubulaire.

2. Ensemble selon la revendication 1, dans lequel la lame (51) et le passage (4) sont agencés pour que l'introduction de la lame provoque une torsion de celle-ci autour de son axe longitudinal pour former une rampe de soulèvement de la patte de retenue (3) par le décrochement lors de l'extraction de l'insert tubulaire (100) .

3. Ensemble selon la revendication 1 ou la revendication 2, dans lequel le corps comprend deux pattes de retenue (3) diamétralement opposées et deux passages correspondants, et l'outil (50) comprend deux lames (51) parallèles ayant des faces principales en regard l'une de l'autre.

4. Ensemble selon l'une quelconque des revendications précédentes, dans lequel l'élément annulaire d'étanchéité (108, 109) est porté par un tronçon d'extrémité de l'insert (100).

5. Ensemble selon l'une quelconque des revendications précédentes, dans lequel la lame (51) est pourvue d'au moins une nervure (56) longitudinale.

6. Ensemble selon la revendication 5, dans lequel la nervure (56) est agencée pour coopérer avec l'extrémité libre de la patte de retenue (3) afin de guider la lame (51) dans le passage.

7. Ensemble selon l'une quelconque des revendications précédentes, dans lequel l'insert tubulaire (100) est pourvu intérieurement d'un organe de connexion instantanée comportant un élément de retenue élastique agencé pour retenir un conduit (T) lorsque le conduit est introduit dans l'insert (100).

8. Ensemble selon la revendication 7, dans lequel l'outil (50) est conformé pour que la lame (51) puisse être introduite axialement entre le conduit (T) et l'élément de retenue élastique pour permettre l'extraction du conduit (T).

9. Ensemble selon la revendication 8, dans lequel l'outil (50) comprend deux lames (51) parallèles ayant des faces principales en regard l'une de l'autre, les lames ayant une extrémité solidaire d'une bague (53) pourvue d'une ouverture (54) permettant une insertion latérale de l'outil sur le conduit (T).

10. Ensemble selon l'une quelconque des revendications 7 à 9, dans lequel le passage (4) débouche à l'extérieur par un tronçon d'entrée pourvu d'au moins un relief (8) de guidage agencé à distance d'une paroi du tronçon d'entrée pour plaquer une face de la lame (51) à plat contre ladite paroi.

## Patentansprüche

1. Einheit zum Verbinden von Fluidtransportleitungen, umfassend eine Verbindungsvorrichtung (1) und ein Demontagewerkzeug (50) zum Demontieren der Vorrichtung, wobei die Verbindungsvorrichtung einen rohrförmigen Körper (2) umfasst, der mindestens einen Endabschnitt (2.1) hat, und einen rohrförmigen Einsatz (100) zur dichten Verbindung, der ausgebildet ist, um auf dichte Weise an einer Leitung (T) befestigt zu werden, wobei der rohrförmige Einsatz (100) in den Endabschnitt (2.1) des rohrförmigen Körpers (2) eingefügt wird, wobei der Körper mindestens eine Rückhaltelasche (3) umfasst, die elastisch hinter einem äußeren Rücksprung (104) des rohrförmigen Einsatzes aufgebracht wird, um sich einem Herausziehen des rohrförmigen Einsatzes zu widersetzen, mindestens ein ringförmiges Dichtungselement (108, 109), das sich zwischen dem rohrförmigen Einsatz und dem Endabschnitt des Körpers erstreckt, **dadurch gekennzeichnet, dass** das Werkzeug ein flexibles Blatt (51) umfasst und der Körper einen Durchtritt (4) transversal zur Achse des rohrförmigen Körpers (2) umfasst, wobei der transversale Durchtritt (4) einerseits außerhalb des Körpers und andererseits auf einer Seite der Rückhaltelasche mündet, um das Einfügen des Blattes zwischen den rohrförmigen Einsatz und die Rückhaltelasche zu gestatten, um die Rückhaltelasche über ihre Breite anzuheben, um den Rücksprung der Rückhaltelasche zu entziehen und das Herausziehen des rohrförmigen Einsatzes zu gestatten.

2. Einheit nach Anspruch 1, bei der das Blatt (51) und der Durchtritt (4) so ausgebildet sind, dass das Einfügen des Blattes eine Torsion desselben um seine Längsachse verursacht, um eine Rampe zum Anheben der Rückhaltelasche (3) durch den Rücksprung während des Herausziehens des rohrförmigen Einsatzes (100) zu bilden.

3. Einheit nach Anspruch 1 oder Anspruch 2, bei der der Körper zwei diametral entgegengesetzte Rückhaltelaschen (3) und zwei entsprechende Durchtritte umfasst und das Werkzeug (50) zwei parallele Blätter (51) umfasst, die einander gegenüberliegende Hauptflächen haben.

4. Einheit nach einem der vorhergehenden Ansprüche, bei der das ringförmige Dichtungselement (108, 109) von einem Endabschnitt des Einsatzes (100) getragen wird.

5. Einheit nach einem der vorhergehenden Ansprüche, bei der das Blatt (51) mit mindestes einer Längsrippe (56) versehen ist.

6. Einheit nach Anspruch 5, bei der die Rippe (56) ausgebildet ist, um mit dem freien Ende der Rückhaltelasche (3) zusammenzuwirken, um das Blatt (51) in dem Durchtritt zu führen.

7. Einheit nach einem der vorhergehenden Ansprüche, bei der der rohrförmige Einsatz (100) innen mit einem Schnellverbindungsorgan versehen ist, das ein elastisches Rückhalteelement umfasst, das ausgebildet ist, um eine Leitung (T) zurückzuhalten, wenn die Leitung in den Einsatz (100) eingefügt ist.

8. Einheit nach Anspruch 7, bei der das Werkzeug (50) so geformt ist, dass das Blatt (51) axial zwischen die Leitung (T) und das elastische Rückhalteelement eingefügt werden kann, um das Herausziehen der Leitung (T) zu gestatten.

9. Einheit nach Anspruch 8, bei der das Werkzeug (50) zwei parallele Blätter (51) umfasst, die einander gegenüberliegende Hauptflächen haben, wobei die Blätter ein Ende haben, das fest mit einem Ring (53) verbunden ist, der mit einer Öffnung (54) versehen ist, die ein seitliches Einfügen des Werkzeugs auf die Leitung (T) ermöglicht.

10. Einheit nach einem der Ansprüche 7 bis 9, bei der der Durchtritt (4) nach außen über einen Eintrittsabschnitt mündet, der mit mindestens einem Führungsrelief (8) versehen ist, das mit Abstand zu einer Wand des Eintrittsabschnitts angeordnet ist, um eine Fläche des Blattes (51) flach gegen die Wand zu drücken.

## Claims

1. Assembly for coupling fluid conveying pipes, comprising a connecting device (1) and a tool (50) for removing the device, the connecting device including a tubular body (2) having at least one end section (2.1), and a tubular sealed connection insert (100) arranged to be secured in a sealed manner to a pipe (T), the tubular insert (100) being engaged in the end section (2.1) of the tubular body (2), the body including at least one retaining lug (3) elastically applied behind an external stepped portion (104) of the tubular insert to oppose extraction of the tubular insert, at least one annular sealing element (108, 109) extending between the tubular insert and the end section of the body, **characterized in that** the tool comprises a flexible blade (51) and the body comprises a passage (4) transverse to the axis of the tubular body (2), said transverse passage (4) opening out on the one hand outside the body and on the other hand on one side of the retaining lug to allow insertion of the blade between the tubular insert and the retaining lug to raise the retaining lug over its width in order to free the stepped portion from the retaining lug and allow the extraction of the tubular insert.

2. Assembly according to Claim 1, in which the blade (51) and the passage (4) are arranged so that the introduction of the blade causes a twist of the latter around its longitudinal axis to form a ramp for lifting the retaining lug (3) by the stepped portion during the extraction of the tubular insert (100).

3. Assembly according to claim 1 or claim 2, wherein the body comprises two diametrically opposed retaining lugs (3) and two corresponding passages, and the tool (50) comprises two parallel blades (51) having main faces facing each other.

4. Assembly according to any one of the preceding claims in which the annular sealing element (108, 109) is carried by an end section of the insert (100).

5. Assembly according to any one of the preceding claims, in which the blade (51) is provided with at least one longitudinal rib (56).

6. Assembly according to claim 5, in which the rib (56) is arranged to cooperate with the free end of the retaining lug (3) in order to guide the blade (51) in the passage.

7. Assembly according to any one of the preceding claims, in which the tubular insert (100) is provided internally with an instantaneous connection member including an elastic retaining member for retaining a pipe (T) when the pipe is introduced into the insert (100).

8. Assembly according to claim 7, wherein the tool (50) is shaped so that the blade (51) can be inserted axially between the pipe (T) and the elastic retaining member to allow extraction of the pipe (T).

9. Assembly according to claim 8, wherein the tool (50) comprises two parallel blades (51) having main faces facing each other, the blades having one end integral with a ring (53) provided with an opening (54) allowing lateral insertion of the tool on the pipe (T).

10. Assembly according to any one of claims 7 to 9, in which the passage (4) opens to the outside via an inlet section provided with at least one guide relief (8) arranged at a distance from a wall of the inlet section to press one face of the blade (51) flat against said wall.
